# EUROPÄISCHE PATENTANMELDUNG

(11) **EP 1 630 012 A1**
(43) Veröffentlichungstag der Anmeldung: **01.03.2006**
(21) Anmeldenummer: 04104030.4
(22) Anmeldetag: 23.08.2004
(51) Int. Cl.: B60G 11/12, F16F 1/38

(54) **Lagerbuchse mit exzentrischem Lagerauge**

(71) Anmelder: Ford Global Technologies, LLC, A subsidary of Ford Motor Company, Dearborn, MI 48126 (US)
(72) Erfinder: Sluimer, Paul, 3920 Lommel (BE)
(74) Vertreter: Drömer, Hans-Carsten

(57) **Zusammenfassung**

Die Erfindung betrifft eine Lagerbuchse eines Fahrwerks mit einer Hülse (2), in der ein Dämpfungselement (3) mit einem Lagerauge (4) angeordnet ist. Das Lagerauge ist mit seinem Mittelpunkt X1, bezogen auf einen zentralen Mittelpunkt X2 der Lagerbuchse (1), exzentrisch angeordnet.

## Beschreibung

Die Erfindung betrifft eine Lagerbuchse einer Fahrwerksaufhängung mit einer Hülse, in der ein Dämpfungselement mit einem Lagerauge angeordnet ist.

Die EP 0 830 956 A2 betrifft eine Einrichtung zur Lagerung einer Feder bzw. eines Führungslenkers einer Fahrzeugachse, bei welcher das vordere Ende der Feder bzw. des Führungslenkers über ein Federauge bzw. Lenkerauge mittels einer Lagerbuchse und eines in zueinander ausgerichteten Öffnungen von Haltebockschenkeln und einem Bolzenaufnahmekanal der Lagerbuchse aufgenommenen Querbolzens an einem chassisfesten Haltebock schwenkbar gelagert ist. Zwischen einem jeweiligen Haltebockschenkel und der Lagerbuchse sind Auflaufmittel für die Lagerbuchse vorgesehen. Die Auflaufmittel für die Lagerbuchse sind von den beiden je ein Loch für die Aufnahme des Querbolzens aufweisenden Schenkeln eines U-Profils gebildet.

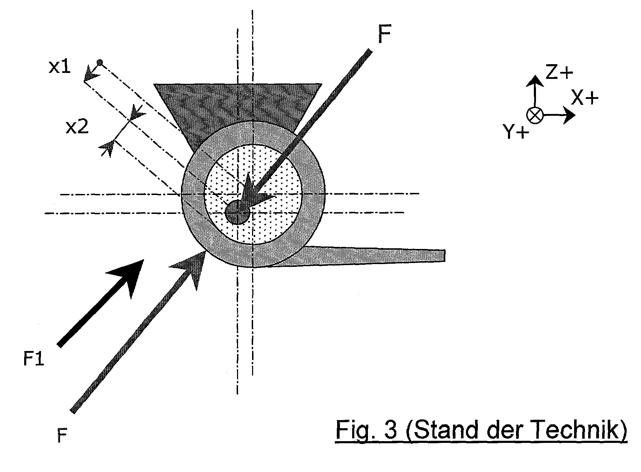

Bekannt ist, Lagerbuchsen z. B. an einer Blattfederaufhängung eines Kraftfahrzeuges vorzusehen. Hierbei verläuft eine Blattfeder, die mit einer geeigneten Anbindungsvorrichtung in einem Radmittelpunkt angeordnet ist, von einer vorderen Blattfederlagerbuchse zu einer hinteren Blattfederlagerbuchse. Über einen Schekel ist die hintere Blattfederlagerbuchse mit einer Lagerbuchse zur Anbindung an eine Fahrzeugkarosserie verbunden. In dem dargestellten Ausführungsbeispiel nach dem Stand der Technik weisen die jeweiligen Lagerbuchsen ein, bezogen auf den zentralen Mittelpunkt der Lagerbuchse zentrisch angeordnetes Lagerauge auf. Bei dieser Art von Aufhängung hat die vordere Blattfederlagerbuchse den größten Teil von Schwingungen und Einwirkungen (Stöße), die von den Reifen zur Fahrzeugkarosserie übertragen werden, zu ertragen. Die geometrische Ausgestaltung der Aufhängung und das statische Gewicht des Fahrzeugs bewirken, daß die Lagerbuchse in derselben Richtung vorgespannt ist, in welcher die Lagerbuchse die Straßeneinwirkungen absorbieren soll. Durch die Vorspannung der Lagerbuchse wird der Mittelpunkt des Lagerauges und damit das Lagerauge selbst schräg in Richtung zu einem Boden ausgelenkt. Diese Vorspannung reduziert aber einen möglichen Kompensationsweg innerhalb der Lagerbuchse und erhöht die Steifigkeit der Lagerbuchse. Beide Effekte erhöhen die Übertragungen von Schwingungen und Einwirkungen auf die Fahrzeugkarosserie, so daß ein Fahrkomfort deutlich reduziert wird. Dieser Zustand ist beispielhaft in Figur 3 dargestellt. Figur 3 zeigt eine Lagerbuchse nach dem Stand der Technik. Die Pfeile F stellen eine statische Vorspannung der Lagerbuchse dar. Der Pfeil F1 stellt die Kraftrichtung von Straßeneinflüssen beispielhaft dar. Der Weg x1 stellt die Verschiebung des Mittelpunktes des Lagerauges dar, wobei x2 den noch verbleibenden Weg zur möglichen Absorbierung von Einflüssen darstellt.

Der Erfindung liegt die Aufgabe zugrunde, eine Lagerbuchse der eingangs genannten Art mit einfachen Mitteln dahin gehend zu verbessern, daß der Fahrkomfort deutlich verbessert wird.

Erfindungsgemäß wird die Aufgabe dadurch gelöst, daß das Lagerauge mit seinem Mittelpunkt, bezogen auf einen zentralen Mittelpunkt der Lagerbuchse, exzentrisch angeordnet ist.

Günstig im Sinne der Erfindung ist, wenn das Lagerauge mit seinem Mittelpunkt, bezogen auf den zentralen Mittelpunkt der Lagerbuchse in Z- und X-Richtung gesehen, versetzt ist.

Der Erfindung liegt die Erkenntnis zugrunde, daß die Vorspannung, die durch das Gewicht der Aufhängung hervorgerufen wird, eine Verlagerung des Lagerauges innerhalb der Lagerbuchse derart bewirkt, daß das Lagerauge exzentrisch in Richtung zu einem Boden, bezogen auf den zentralen Mittelpunkt der Lagerachse, verschoben wird. Mit der erfindungsgemäßen Lösung wird diesem Effekt vorgebeugt, indem das Lagerauge in einer zur resultierenden Verschiebung entgegengesetzten Richtung, bezogen auf den zentralen Mittelpunkt der Lagerbuchse, von vornherein exzentrisch angeordnet wird. Wenn nun das Gewicht auf die erfindungsgemäße Lagerbuchse einwirkt, verschiebt sich das zunächst exzentrisch angeordnete Lagerauge in Richtung zum zentralen Mittelpunkt der Lagerbuchse.

Wirken nun Schwingungen oder Straßeneinwirkungen (Stöße) auf die Lagerbuchse ein, hat diese aufgrund der vormals exzentrischen Anordnung des Lagerauges wesentlich mehr Bewegungsfreiheit oder Nachgiebigkeit, um die Schwingungen bzw.

Straßeneinflüsse zu absorbieren, da das Lagerauge mit seinem Mittelpunkt nun bevorzugt kongruent zu dem zentralen Mittelpunkt der Lagerbuchse angeordnet ist.

Alternativ kann vorgesehen sein, daß der Versatz in einem unbelasteten Zustand erhöht wird, so daß die Lagerbuchse quasi einen Überkompensationszustand aufweist. Hierdurch kann eine noch höhere Nachgiebigkeit in Richtung der Schwingungen bzw. Einflüsse auf die Lagerbuchse erhöht werden, da das Lagerauge mit seinem Mittelpunkt auch im vorgespannten Zustand exzentrisch zum zentralen Mittelpunkt der Lagerbuchse angeordnet ist.

Vorteilhafterweise wird mit der erfindungsgemäßen Ausgestaltung der Lagerbuchse zudem ein zusätzlicher Freiheitsgrad erreicht, um die Lagerbuchse in ihren Eigenschaften einzustellen. Mittels der erfindungsgemäßen Ausgestaltung der Lagerbuchse wird der Fahrkomfort deutlich erhöht, da die Lagerbuchse eine größere Nachgiebigkeit aufweist und so wesentlich mehr Schwingungen bzw. Straßeneinflüsse absorbieren kann. Zudem wird eine bessere Abstimmung zwischen dem Fahrkomfort und dem Lenken bzw. dem Handling des Kraftfahrzeugs erreicht. Weiter wird eine mögliche Lagerbuchsendeformation, insbesondere des Dämpfungselementes in einer vorgegebenen Richtung erreicht, ohne daß ein notwendiger Montageraum vergrößert werden muß. Im allgemeinen wird mittels der erfindungsgemäßen Ausgestaltung der Lagerbuchse die elasto-kinematische Leistungsfähigkeit von Aufhängungsbuchsen bei gleichbleibenden Gestehungskosten erhöht

Weitere vorteilhafte Ausgestaltungen der Erfindung sind in den Unteransprüchen und der folgenden Figurenbeschreibung offenbart. Es zeigen:
- Fig. 1: einen Querschnitt durch eine Lagerbuchse.
- Fig. 2: eine Fahrwerksaufhängung in einer Prinzipdarstellung
- Fig. 3: eine Lagerbuchse nach dem Stand der Technik.

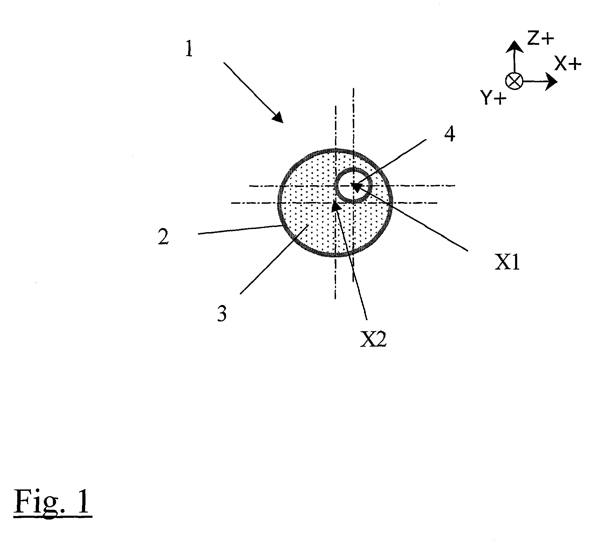

Figur 1 zeigt eine Lagerbuchse 1. Die Lagerbuchse 1 weist eine Hülse 2 auf, in der ein Dämpfungselement 3 mit einem Lagerauge 4 angeordnet ist. Die Lagerbuchse 1 ist bevorzugt als Gummilager ausgestaltet. Das Lagerauge 4 ist mit seinem Mittelpunkt X1, bezogen auf einen zentralen Mittelpunkt X2 der Lagerbuchse 1, exzentrisch angeordnet. Das Lagerauge 4 ist mit seinem Mittelpunkt X1, bezogen auf den zentralen Mittelpunkt X2 der Lagerbuchse 1, in dem bevorzugten Ausführungsbeispiel in einer Z- und X-Richtung gesehen versetzt.

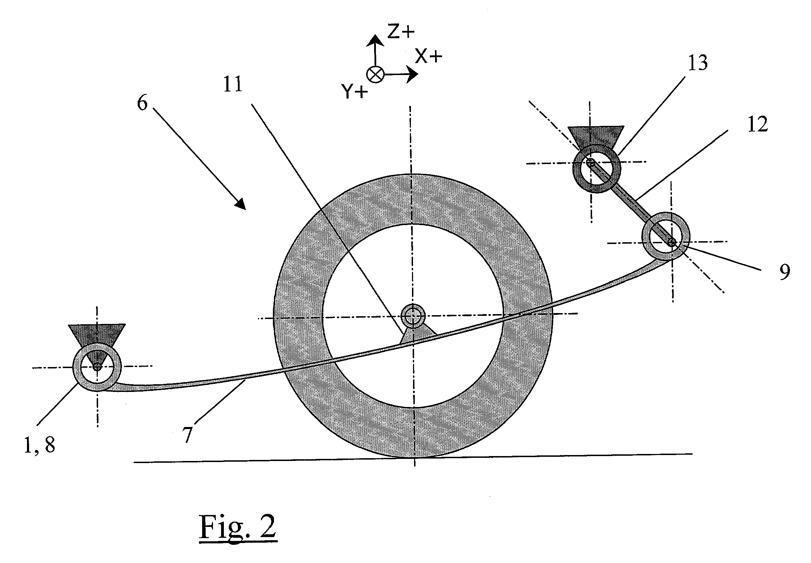

Die Lagerbuchse 1 ist bevorzugt als Blattfederlagerbuchse einer Blattfederaufhängung 6 (Figur 2) eines Kraftfahrzeuges einsetzbar. Denkbar ist allerdings, daß die erfindungsgemäße Lagerbuchse 1 grundsätzlich an allen Aufhängungstypen an Kraftfahrzeugen einsetzbar ist.

In Figur 2 ist die Blattfederaufhängung 6 einer sogenannten Hotchkiss-Hinterachse (Trägerachse mit Blattfeder) beispielhaft dargestellt. Hierbei verläuft eine Blattfeder 7 von einer vorderen Blattfederlagerbuchse 8 zu einer hinteren Blattfederlagerbuchse 9. Mittels einer geeigneten Anbindungsvorrichtung 11 ist die Blattfeder 7 mit einem Radmittelpunkt verbunden. Über einen Schekel 12 ist die hintere Blattfederlagerbuchse 9 mit einer Lagerbuchse 13 zur Anbindung an einer nicht dargestellten Karosserie verbunden. Das in Figur 2 dargestellte beispielhafte System ist im vorgespannten Modus dargestellt, wobei der Schekel 12 mit seinen Lagerpunkten aus den Mittelpunkten der Lagerbuchsen 9 bzw. 13 verschoben ist.

In dem dargestellten Ausführungsbeispiel ist die vordere Lagerbuchse 8 erfindungsgemäß mit einem zum zentralen Mittelpunkt X2 versetzten Mittelpunkt X1 des Lagerauges 4 ausgestaltet. In Figur 2 ist dieser Versatz nicht mehr erkennbar, da unter anderem die Blattfederaufhängung 6 mit ihrem Gewicht auf die jeweiligen Lagerbuchsen, insbesondere auf die vordere Blattfederlagerbuchse 8 einwirkt, so daß diese im vorgespannten Zustand zueinander kongruente Mittelpunkte X1 bzw. X2 aufweist. Deutlich erkennbar ist im Vergleich zu Figur 3, daß ein noch verbleibender Absorptionsweg erheblich vergrößert ist. Damit ist die erfindungsgemäße Lagerbuchse 1 in der Lage, Straßeneinflüsse wesentlich besser zu absorbieren. Hierdurch wird zum Beispiel der Fahrkomfort erheblich gesteigert.

Selbstverständlich ist die Erfindung nicht darauf beschränkt, daß die erfindungsgemäße Lagerbuchse 1 nur bei dem in Figur 2 dargestellten Ausführungsbeispiel verwendet werden kann. Vielmehr kann die erfindungsgemäße Lagerbuchse 1 bei allen Fahrwerksaufhängungen in ihren unterschiedlichen Ausgestaltungen eingesetzt werden. Insbesondere die beispielhafte Verwendung der erfindungsgemäßen Lagerbuchse 1 als vordere Lagerbuchse 8 soll nicht auf einen solchen Einsatz beschränkt sein. Natürlich kann die erfindungsgemäße Lagerbuchse 1 an jedem geeigneten Ort der jeweiligen Fahrwerksaufhängung montiert sein. Auch der in Figur 1 dargestellte Versatz des Mittelpunktes X1 zum zentralen Mittelpunkt X2 der Lagerbuchse 1 soll nur beispielhaft sein. Der Versatz ist sinnvoll an jeweilige Bedingungen der Fahrwerksaufhängung insbesondere an das Gewicht anpaßbar. Denkbar ist auch einen Versatzbetrag derart zu wählen, daß die jeweiligen Mittelpunkte X1 bzw. X2 im vorgespannten Zustand etwas versetzt sind, wodurch die Nachgiebigkeit der Lagerbuchse 1 weiter erhöht wird. Die erfindungsgemäße Lagerbuchse 1 ist besonders vorteilhaft, wenn radiale Nachgiebigkeiten benötigt werden.

## Patentansprüche

1. Lagerbuchse einer Fahrwerksaufhängung mit einer Hülse (2), in der ein Dämpfungselement (3) mit einem Lagerauge (4) angeordnet ist,
**dadurch gekennzeichnet, daß**
das Lagerauge (4) mit seinem Mittelpunkt X1, bezogen auf einen zentralen Mittelpunkt X2 der Lagerbuchse (1), exzentrisch angeordnet ist.

2. Lagerbuchse nach Anspruch 1,
**dadurch gekennzeichnet, daß**
das Lagerauge (4) mit seinem Mittelpunkt X1, bezogen auf den zentralen Mittelpunkt X2 der Lagerbuchse (1), in Z- und X-Richtung gesehen versetzt ist.
